# EUROPÄISCHE PATENTSCHRIFT

(11) **EP 2 935 743 B1**
(45) Veröffentlichungstag und Bekanntmachung des Hinweises auf die Patenterteilung: **12.09.2018**
(21) Anmeldenummer: 13802353.6
(22) Anmeldetag: 06.12.2013
(51) Int. Cl.: E05D 11/00, H02J 5/00, H02J 7/02, H04B 5/00

(54) **VERFAHREN UND VORRICHTUNG ZUR ÜBERTRAGUNG VON ELEKTRISCHER LEISTUNG UND VON SIGNALEN ZWISCHEN EINER FESTSTEHENDEN WAND UND EINEM SCHWENKBAR AN DIESER WAND BEFESTIGTEN FLÜGEL**
METHOD AND DEVICE FOR TRANSMITTING ELECTRIC POWER AND SIGNALS BETWEEN A STATIONARY WALL AND A LEAF PIVOTABLY MOUNTED ON SAID WALL
PROCÉDÉ ET DISPOSITIF DE TRANSMISSION DE PUISSANCE ÉLECTRIQUE ET DE SIGNAUX ENTRE UNE PAROI FIXE ET UN BATTANT FIXÉ À CETTE PAROI DE MANIÈRE À POUVOIR PIVOTER

(30) Priorität: 21.12.2012 DE 102012112854
(43) Veröffentlichungstag der Anmeldung: 28.10.2015
(60) Teilanmeldung: 16157124.5
(73) Patentinhaber: Dr. Hahn GmbH & Co. KG, 41189 Mönchengladbach-Wickrath (DE)
(72) Erfinder: STEUDTNER, Joachim, 95152 Selbitz (DE)
(74) Vertreter: Kluin, Jörg-Eden
(86) Internationale Anmeldenummer: PCT/EP2013/075784
(87) Internationale Veröffentlichungsnummer: WO 2014/095421

(56) Entgegenhaltungen:
- EP-A2- 0 908 594
- DE-A1- 3 915 812
- DE-A1- 4 344 071
- DE-A1-102011 050 342
- DE-U1-202006 016 439
- DE-U1-202011 052 457

## Beschreibung

Die Erfindung betrifft ein Verfahren und eine Vorrichtung zur Übertragung von elektrischer Leistung und von Signalen zwischen einer feststehenden Wand und einem schwenkbar an dieser Wand befestigten Flügel, wobei die elektrische Leistung galvanisch getrennt, insbesondere induktiv übertragen wird.

Ein derartiges Verfahren und eine derartige Vorrichtung sind aus der DE 39 15 812 A1 bekannt. Zur Leistungsübertragung sind konzentrisch angeordnete Spulen oder ein zylindrisch ausgebildeter Kondensator vorgesehen. Eine Signalübertragung soll ebenfalls über die Spulen oder den Kondensator oder über Funk erfolgen.

Nachteilig hieran ist, dass bei der Übertragung der Signale durch dieselbe Anordnung, die auch der Leistungsübertragung dient, eine gegenseitige Beeinflussung der Übertragungen nicht ausgeschlossen werden kann. Darüber hinaus erfordert eine optimierte Leistungsübertragung regelmäßig eine andere konstruktive Anpassung der Spulen bzw. des Kondensators als eine optimierte Signalübertragung, so dass die Verwendung ein und derselben Übertrageranordnung stets nur ein nicht optimaler Kompromiss sein kann.

Wird das Signal über Funk übermittelt, so kann zwar grundsätzlich die Vorrichtung zur Leistungsübertragung hierzu optimiert ausgebildet sein. Die Funkübertragung ist jedoch regelmäßig anfällig gegen äußere Störeinflüsse und kann mit geeigneten Mitteln durch äußere Sender beeinflusst werden, was insbesondere von Nachteil ist, wenn es sich um sicherheitsrelevante Signale handelt.

Eine Einrichtung zur Überwachung eines Türöffnungsbereichs zwischen einem Türrahmen und einem in Bezug auf den Türrahmen schiebebeweglichen Türblatt ist aus der EP 908 594 A2 bekannt. Die elektrischen Pfade zwischen dem beweglichen Türblatt und dem feststehenden Türrahmen zur Übermittlung von Steuersignalen und zur Versorgung mit elektrischer Energie sind voneinander unabhängig.

Eine Vorrichtung mit den Merkmalen des Oberbegriffs des Anspruchs 1 ist aus der DE 10 2011 050 342 A1 bekannt. Der Erfindung liegt daher die Aufgabe zugrunde, eine verbesserte Vorrichtung und ein verbessertes Verfahren zur Übertragung von elektrischer Leistung und von Signalen zwischen einer feststehenden Wand und einem schwenkbar an dieser Wand befestigten Flügel zu schaffen.

Diese Aufgabe wird durch die in Anspruch 1 wiedergegebene Vorrichtung und das in Anspruch 3 wiedergegebene Verfahren gelöst.

Die erfindungsgemäße Vorrichtung zur Übertragung von elektrischer Leistung und von Signalen zwischen einer feststehenden Wand und einem um eine Scharnierachse schwenkbaren an der Wand befestigten Flügel umfasst eine Leistungsübertragungseinrichtung zur galvanisch getrennten Übertragung der elektrischen Leistung. Erfindungsgemäß ist eine optische oder opto-elektronische Signalübertragungseinrichtung vorgesehen.

Die Leistungsübertragungseinrichtung umfasst eine Primär- und eine Sekundärspulenanordnung.

Um eine Leistungsübertragung mit möglichst geringen Verlusten und eine möglichst zuverlässige Signalübertragung zu bewirken, sind die Spulenanordnungen und die Signalübertragungseinrichtung derart ausgebildet, dass sie jeweils eine zentrale Achse aufweisen, und sind derart angeordnet, dass die zentralen Achsen etwa mit der Scharnierachse zusammenfallen. Bei einer Schwenkbewegung des Flügels um die Scharnierachse rotieren die Spulenanordnungen und die Bauteile der Signalübertragungseinrichtung, beispielsweise die Leuchtdiode und der Fototransistor, lediglich jeweils relativ zueinander und verlagern ihre Positionen zueinander ansonsten nicht. Die Primär- und die Sekundärspulenanordnungen sind vorzugsweise identisch ausgebildet. Ihre Impedanz und ihr Gehäuse- bzw. Kernmaterial sind hinsichtlich der Betriebsfrequenz und der maximal zu übertragenden Leistung optimiert.

Die erfindungsgemäße Vorrichtung umfasst eine erste Leistungsübertragungseinrichtung zur bedarfsgerechten Bereitstellung von elektrischer Leistung für flügelseitige Verbraucher. Beispielhaft seien als flügelseitige Verbraucher Motorschlösser, Beleuchtungen etc. genannt. Diesen Verbrauchern soll mit Hilfe der Leistungsübertragungseinrichtung die Leistung bereitgestellt werden, die sie für ihre Funktion benötigen. So soll die Primärleistung, mit welcher die Primärspulenanordnung beaufschlagt wird, dem jeweiligen flügelseitigen Leistungsbedarf angepasst werden.

Um diese Anpassung zu bewerkstelligen, umfasst diese Vorrichtung eine erste Signalübertragungseinrichtung zur Regelung der mittels der ersten Leistungsübertragungseinrichtung für flügelseitige Verbraucher bereitgestellten elektrischen Leistung. Mit Hilfe dieser ersten Signalübertragungseinrichtung wird eine Regelschaltung geschaffen, die dafür sorgt, dass - abgesehen von Verlusten in der Leistungsübertragungseinrichtung und in zum Betrieb derselben vorgesehenen elektronischen Schaltungen selbst - nur soviel Leistung in die Primärseite der Leistungsübertragungseinrichtung hineinfließt, wie an den flügelseitigen Verbraucher abgegeben wird. Die dafür erforderliche Regelung erfolgt vorzugsweise rein analog, kann beispielsweise über eine Pulsbreiten- oder über eine Pulsphasensteuerung erfolgen.

Darüber hinaus umfasst diese Vorrichtung eine zweite Leistungsübertragungseinrichtung zur Bereitstellung von zum Betrieb von Sensoren, Meldern und/oder Meldegruppen benötigter Leistung. Diese zweite Leistungsübertragungseinrichtung kann ebenfalls primär- und sekundärseitige Spulenanordnungen umfassen, wobei die Primärspulenanordnung wiederum wandseitig, die Sekundärspulenanordnung flügelseitig angeordnet ist. Da Sensoren, Melder und Meldegruppen regelmäßig nur einen erheblich geringeren Leistungsbedarf als Verbraucher wie Motorschlösser, Beleuchtungen etc. aufweisen, und dieser Leistungsbedarf erheblich konstanter ist, kann auf eine Regelschaltung zur Regelung der Primärleistung, mit welcher die zweite Leistungsübertragungseinrichtung beaufschlagt wird, verzichtet werden. Die Primär- und die Sekundärspulenanordnungen sind vorzugsweise identisch ausgebildet. Ihre Impedanz und ihr Gehäuse- bzw. Kernmaterial sind hinsichtlich der Betriebsfrequenz und der maximal zu übertragenden Leistung optimiert.

Gleichwohl umfasst diese Vorrichtung eine zweite Signalübertragungseinrichtung. Diese dient jedoch nur zur Übertragung von Betriebs- und/oder Meldezuständen der sekundärseitigen Sensoren, Melder oder Meldegruppen, an eine primär- bzw. wandseitige Gefahrenmeldeanlage.

Die Trennung der für den Betrieb der Sensoren, Melder oder Meldegruppen benötigten Leistungsübertragung von der Leistungsübertragung zum Betrieb der weiteren, flügelseitigen Verbraucher hat unter anderem auch den Vorteil, dass durch plötzliche Leistungsschwankungen möglicherweise entstehende Störeinflüsse vermieden werden. Auch kann primär- bzw. wandseitig eine weniger leistungsfähige, dafür jedoch beispielsweise unempfindlichere und für einen längeren Zeitraum akkumulator- oder batteriegepufferte Primärspannungsquelle bereitgestellt werden, wodurch sich die mit der erfindungsgemäßen Vorrichtung erzielbare Betriebssicherheit erhöht.

Die Signalübertragungseinrichtung umfasst vorzugsweise eine Leuchtdiode (LED) und eine Fotodiode oder einen Fototransistor.

Bei dem erfindungsgemäßen Verfahren werden die Signale optisch oder opto-elektronisch zwischen der Wand und dem Flügel übertragen. Die optische oder opto-elektronische Übertragung ermöglicht einerseits sehr hohe Datenübertragungsraten, so dass die Signalübertragung auch mit hoher Auflösung digital erfolgen kann. Darüber hinaus lässt sich - anders als bei funktechnischer Übertragung - die optische oder opto-elektronische Übertragung problemlos nach außen hin vollständig abschirmen, so dass sie unempfindlich gegen äußere Störeinflüsse oder Manipulationsversuche ist. Schließlich zeichnet sich eine optische oder opto-elektronische Signalübertragung durch einen sehr geringen Leistungsbedarf aus, so dass die für die Signalübertragung gesondert bereitzustellenden elektrischen Leistungen vergleichsweise gering sind.

Bei einer bevorzugten Ausführungsform des erfindungsgemäßen Verfahrens wird die elektrische Leistung von einer Primär- zu einer Sekundärseite, und die Signale werden von der Sekundär- zur Primärseite übertragen.

Bei den Signalen kann es sich um solche handeln, die den Leistungsbedarf sekundärseitig vorgesehener Verbraucher an die Primärseite übermitteln, um so einen Regelkreis zu schaffen, der dafür sorgt, dass - abgesehen von Verlusten bei der galvanisch getrennten Übertragung - nur soviel elektrische Leistung geführt wird, wie von dem Verbraucher benötigt wird. Der Regelkreis kann rein analog arbeiten, d.h. der Leistungsbedarf kann in Abhängigkeit der Intensität der optisch oder opto-elektronisch übertragenen elektromagnetischen Strahlung übermittelt werden.

Oder die Signale dienen zur Übertragung von Betriebs- und/oder Meldezuständen von sekundärseitigen Sensoren, Meldern oder Meldegruppen, beispielsweise an eine primärseitige Gefahrenmeldeanlage. Sollen mit Hilfe des erfindungsgemäßen Verfahrens lediglich derartige Signale von der Sekundärseite auf die Primärseite übertragen werden, so wird vorzugsweise primärseitig lediglich eine solche Leistung vorgehalten, die zum Betrieb der Sensoren, Melder oder Meldegruppen ausreicht. Auf einen Regelkreis kann dann verzichtet werden.

Besonders bevorzugt ist die Primärseite die Wandseite und die Sekundärseite die Flügelseite. Wandseitig steht über den meist vorhandenen Netzanschluss genügend elektrische Leistung über einen Netzanschluss zur Verfügung. Flügelseitig sind regelmäßig Sensoren, Melder oder Meldegruppen, wie Glasbruchsensoren, Schließsensoren etc. vorhanden, deren Signale von einer stationären, d.h. wandseitigen Gefahrenmeldeanlage verwertet werden müssen.

Besonders bevorzugt ist eine Weiterbildung des erfindungsgemäßen Verfahrens, bei welcher primärseitig eine Gleichspannung bereitgestellt wird, und bei welcher diese Gleichspannung in eine Wechselspannung einer Frequenz vorzugsweise zwischen 10 und 300 kHz umgewandelt wird, um zur galvanisch getrennten induktiven Übertragung verwendet zu werden. Diese Gleichspannung kann von einem Batterie bzw. Akkumulator gepufferten Netzteil einer Gefahrenmeldeanlage bereitgestellt werden. Hierdurch ist die störungsfreie Durchführung des Verfahrens solange gewährleistet, wie auch die Gefahrenmeldeanlage betrieben werden kann. Die Gleichspannung kann mit Hilfe beispielsweise einer Mosfet-Leistungsschaltung, die beispielsweise über eine Pulsbreiten- oder über eine Pulsphasensteuerung leistungsgeregelt sein kann, in die Wechselspannung umgewandelt werden.

Die Primär- und die Sekundärspulenanordnungen sind vorzugsweise identisch ausgebildet. Ihre Impedanz und ihr Gehäuse- bzw. Kernmaterial sind hinsichtlich der Betriebsfrequenz und der maximal zu übertragenden Leistung optimiert.

Die Erfindung soll nun anhand der Zeichnungen, in denen ein Ausführungsbeispiel einer erfindungsgemäßen Vorrichtung dargestellt ist, weiter erläutert werden. Es zeigen:
- Fig. 1: das Ausführungsbeispiel der erfindungsgemäßen Vorrichtung im teilweisen Längsschnitt;
- Fig. 2: den Ausschnitt A in Fig. 1 in einer vergrößerten Darstellung;
- Fig. 3: eine perspektivische Explosionsdarstellung einer Baugruppe, die eine Leistungsübertragungseinrichtung sowie eine Signalübertragungseinrichtung umfasst;
- Fig. 4: ein Blockschaltbild einer elektrischen Schaltung, mit welcher eine Baugruppe gemäß Fig. 3 verschaltet ist, wenn diese zur Bereitstellung elektrischer Leistung an flügelseitige Verbraucher vorgesehen ist, sowie

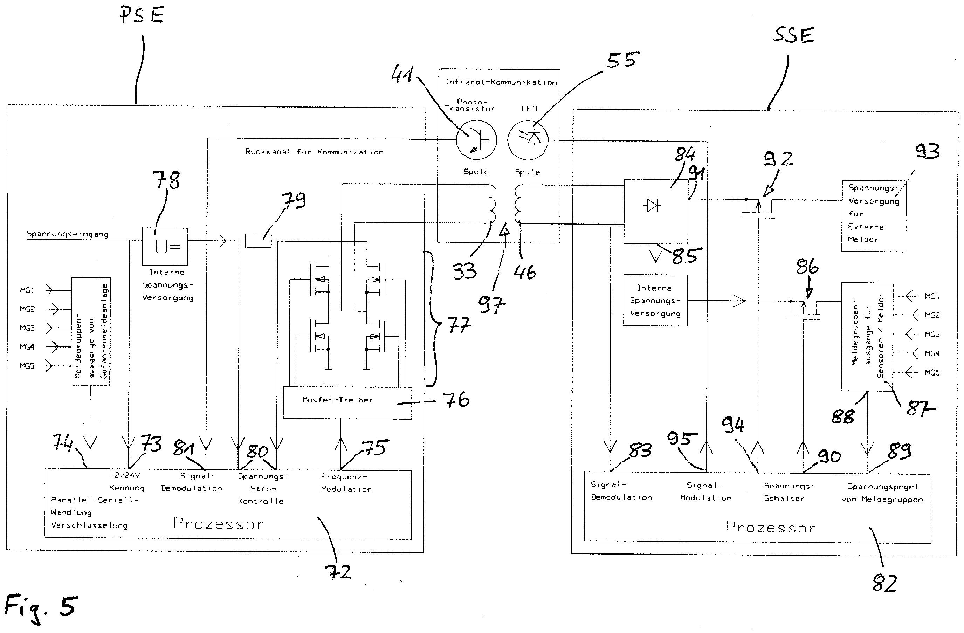

- Fig. 5: ein Blickschaltbild einer elektrischen Schaltung, mit welcher eine Baugruppe gemäß Fig. 3 verschaltet ist, wenn diese für die Übertragung von Signalen vom Flügel zur Wand vorgesehen ist.

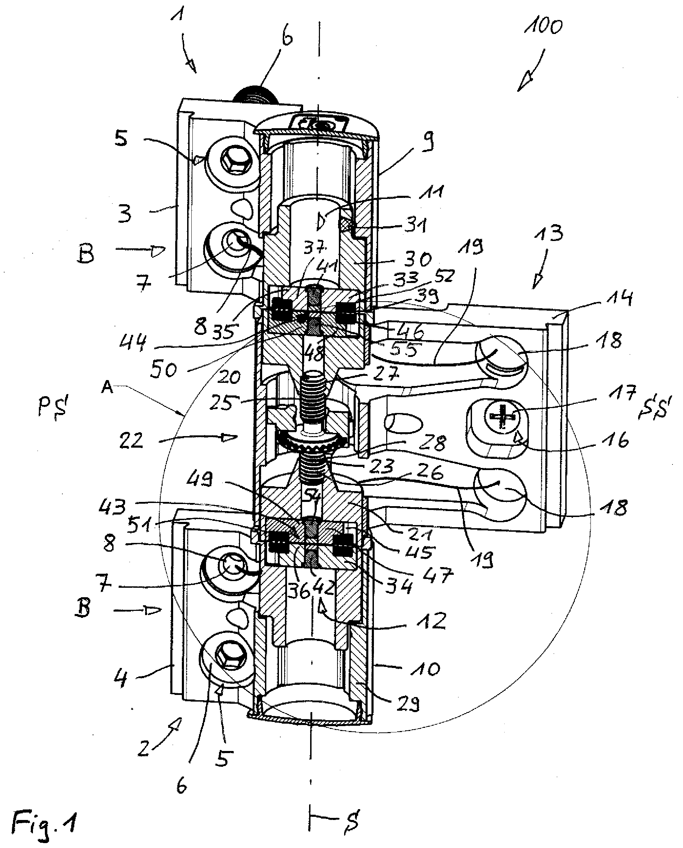

Die in Fig. 1 als Ganzes mit 100 bezeichnete Vorrichtung umfasst zwei Wandteile 1, 2, die in Richtung einer Scharnierachse S voneinander beabstandet an einer in der Zeichnung nicht dargestellten Wand, die eine Tür- oder Fensteröffnung aufweist, befestigbar sind. Die vorstehende oder nachfolgende Verwendung des Begriffs "Wand" schließt einen Rahmen oder eine Zarge ein, die im Bereich einer Tür- oder Fensteröffnung an der Wand üblicherweise vorgesehen ist.

Die Wandteile umfassen Befestigungsteile 3, 4. Jedes Befestigungsteil weist eine Bohrung 5 zur Aufnahme einer Befestigungsschraube 6 sowie eine Bohrung 7 zum Durchführen von elektrischen und/oder optischen Kabeln 8, die in Fig. 1 lediglich angedeutet sind und die die elektrische oder optische Verbindung von Leistungs- oder Signalübertragern und zugehörigen elektronischen oder optoelektronischen Schaltungen herstellen, wie weiter unten noch genauer beschrieben wird.

Üblicherweise bildet die Wand eine Primärseite PS, von der aus elektrische Leistung in den Flügel, der die Sekundarseite SS ist, übertragen wird.

An die Befestigungsteile 3, 4 ist jeweils ein Aufnahmeteil 9, 10 zur Aufnahme von Bauteilen von Leistungs- und Signalübertragungseinrichtungen 11, 12 angeformt.

Die Vorrichtung 100 umfasst darüber hinaus ein Flügelteil 13, welches zwischen den beiden Wandteilen 1, 2 angeordnet ist. Das Flügelteil 13 weist ebenfalls ein Befestigungsteil 14 und ein an das Befestigungsteil 14 angeformtes Aufnahmeteil 15 auf. An dem Befestigungsteil 14 ist eine Bohrung 16 für eine Befestigungsschraube 17 vorgesehen, mit welcher das Flügelteil 13 an einem in der Zeichnung nicht dargestellten Flügel montierbar ist. Das Befestigungsteil 14 weist darüber hinaus noch Bohrungen 18 auf, die der Durchleitung von elektrischen und/oder optischen Kabeln 19 dienen, die in der Zeichnung wiederum lediglich schematisch dargestellt sind. Diese Kabel dienen der Verbindung der Leistungs- und Signalübertragungseinrichtungen 11, 12 mit flügelseitigen elektronischen oder optoelektronischen Schaltungen.

Das Aufnahmeteil 15 dient ebenfalls der Aufnahme von flügelseitigen Bauteilen der Leistungs- und Signalübertragungseinrichtungen 11, 12. Diese flügelseitigen Bauteile umfassen zwei Lagerhülsen 20, 21, die in Richtung der Scharnierachse S voneinander beabstandet und in dieser Richtung relativ zueinander verschiebbar gelagert sind. Der Verschiebung und Fixierung in einer gewünschten Position dient ein Spindelantrieb 22. Er umfasst eine Stellspindel 23, die mittig ein Kronenrad 24 umfasst. Dieses Kronenrad dient dem wahlweisen Ansetzen eines in der Zeichnung nicht dargestellten Drehwerkzeugs oder dem Eingriff einer in der Zeichnung ebenfalls nicht erkennbaren Drehbetätigungseinrichtung. Die Stellspindel weist darüber hinaus zwei Gewindebereiche 25, 26 auf, die im umgekehrten Sinne ausgebildete Außengewinde umfassen. Die Gewindebereiche 25, 26 greifen in komplementäre Innengewinde 27, 28 der Lagerhülsen 20, 21 ein. Durch Drehbetätigung des Spindelantriebs 22 lassen sich somit die Lagerhülsen 20, 21 in Richtung der Scharnierachse verlagern, um so zwischen einer Montageposition, in der die Lagerhülsen 20, 21 einen minimalen Abstand zueinander aufweisen, und einer Betriebsposition, in welcher die Lagerhülsen 20, 21 an Lagerhülsen 29, 30 in den Aufnahmeteilen 9, 10 der Wandteile nahezu anliegen, verstellt zu werden.

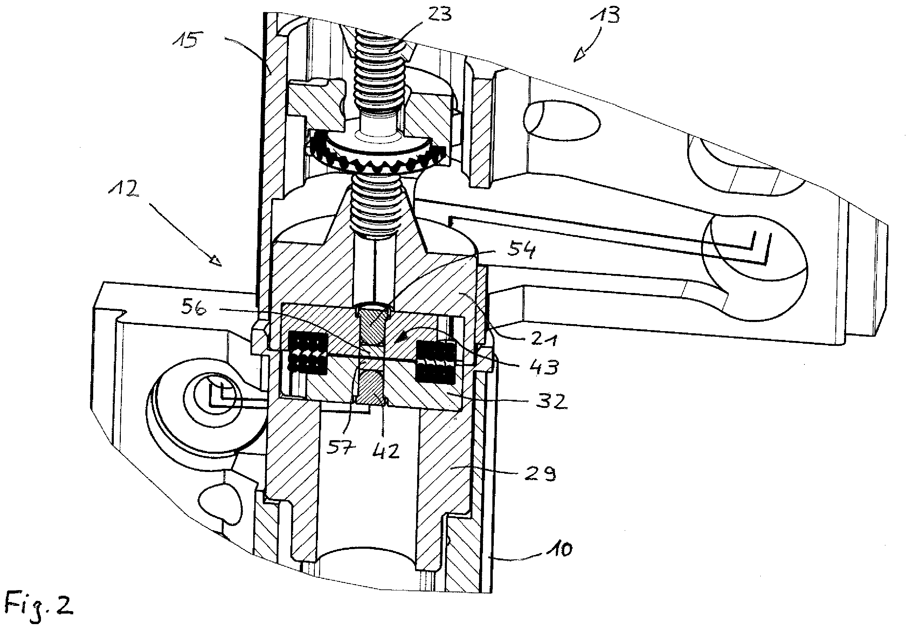

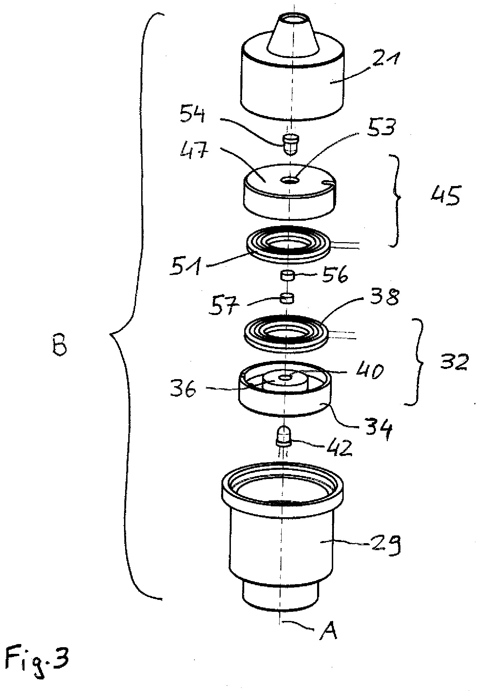

Der Aufbau und die Wirkungsweise der Leistungs- und Signalübertragungseinrichtungen 11, 12 soll nun unter Bezugnahme auf die Fig. 2 und 3, in denen die in Fig. 1 untere Leistungs- und Signalübertragungseinrichtung 12 erkennen lassen, erläutert werden.

Die Leistungs- und Signalübertragungseinrichtung 12 umfasst neben der Lagerhülse 21, welche verschiebbar in dem Aufnahmeteil 15 des Flügelteils 13 mit Hilfe der Stellspindel 23 verschiebbar gelagert ist, die Lagerhülse 29, die in dem Aufnahmeteil 10 angeordnet ist. Die funktionell entsprechende Lagerhülse 30 ist auch in dem Aufnahmeteil 9 des oberen Wandteils 1 angeordnet. Eine Verlagerbarkeit der Lagerhülsen 29, 30 in Richtung der Scharnierachse S ist nicht vorgesehen. Die obere Lagerhülse 30 umfasst eine radial vorstehende Klemmeinrichtung 31, damit sie nach einem eventuellen Entfernen des Flügelteils 13 nicht selbsttätig nach unten heraus fällt.

In die Lagerhülsen 29, 30 ist jeweils eine Primärspulenanordnung 32, 33 eingesetzt. Sie umfassen jeweils ein Spulengehäuse 34, 35 aus einem weichmagnetischen, insbesondere ferritischen Material. Die Spulengehäuse 34, 35 weisen einen zentralen Kern 36, 37 auf, um welchen die Spulenwicklungen 38, 39 geführt sind. In jedem Kern 36, 37 ist eine zentrale Bohrung 40 vorgesehen. Sie dient der Aufnahme jeweils eines Fototransistors 41, 42, welcher zum Sekundärteil einer optoelektronischen Signalübertragungseinrichtung 43, 44 gehört.

In den Lagerhülsen 20, 21 ist jeweils eine Sekundärspulenanordnung 45, 46 angeordnet. Sie umfasst ebenfalls jeweils ein Spulengehäuse 47, 48 mit einem Kern 49, 50, um welchen herum die Sekundärspulenwicklung 51, 52 gewunden sind.

Die Spulengehäuse 47, 48 weisen wiederum eine zentrale, sich durch den jeweiligen Kern 49, 50 erstreckende zentrale Bohrung 53 auf. Diese dient der Aufnahme jeweils einer Leuchtdiode (LED) 54, 55, die nicht notwendigerweise im sichtbaren Lichtbereich arbeiten muss, sondern die hinsichtlich der Wellenlänge der abgegebenen, elektromagnetischen Strahlung (bzw. des sichtbaren oder unsichtbaren Lichts) an den jeweiligen Fototransistor 41, 42 angepasst ist.

Die Leuchtdioden 54, 55 gehören zum jeweiligen Primärteil einer der Signalübertragungseinrichtungen 43, 44.

Um die optische Ankopplung der Leuchtdioden 54, 55 an den jeweiligen Fototransistor 41, 42 zu verbessern, sind Lichtleitereinsätze 56, 57 vorgesehen, welche von den einander zugewandten Seiten der Spulengehäuse in die Bohrungen 40, 53 eingesetzt sind und mit den einander zugewandten Seiten der Spulengehäuse eben abschließen.

Wie in Fig. 3 erkennbar ist, sind die Spulenanordnungen und die Signalübertragungseinrichtungen symmetrisch zu einer zentralen Achse A angeordnet. Im montierten Zustand fällt diese Achse mit der Scharnierachse S zusammen.

Wie in Fig. 1 erkennbar ist, weist die erfindungsgemäße Vorrichtung zwei der in Fig. 3 dargestellten Baugruppen B, die jeweils eine Einrichtung zur Leistungs- und eine zur Signalübertragung umfassen, auf, wobei die beiden Baugruppen B in umgekehrter Richtung angeordnet sind.

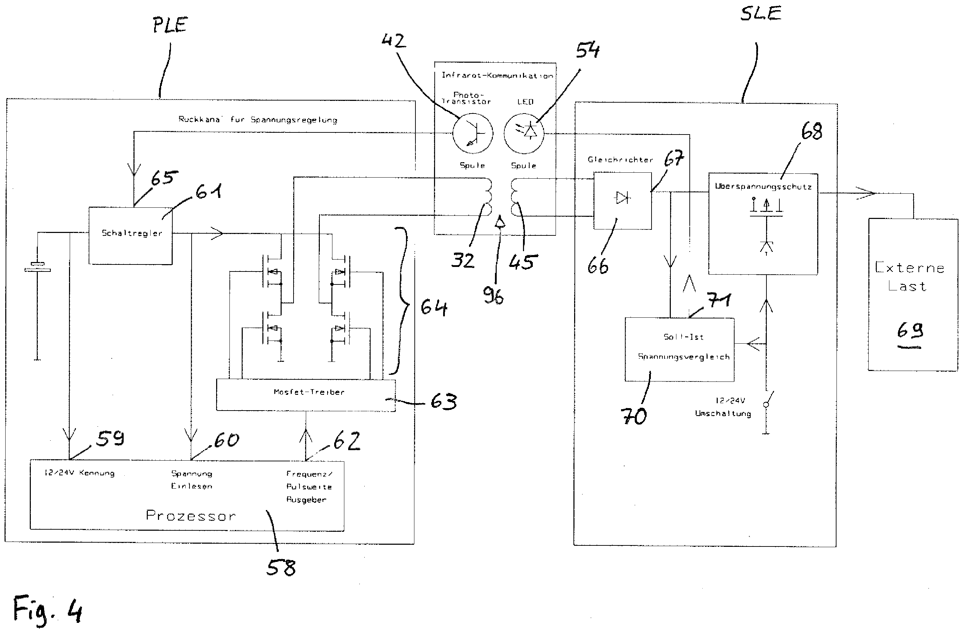

Eine der Baugruppen B gehört zu einer Einrichtung zur bedarfsgerechten Bereitstellung von elektrischer Leistung für flügelseitige Verbraucher. Es sei zum Zwecke der Beschreibung angenommen, dass dies die in Fig. 1 untere Baugruppe B ist. Die Primärspulenanordnung 32 und der Fototransistor 42 sind dann mit einer Primär-Leistungselektronik PLE, die Sekundärspulenanordnung 45 und die Leuchtdiode 54 mit einer Sekundär-Leistungselektronik SLE verbunden. Die Primärspulenanordnung 32 und die Sekundärspulenanordnung 45 gehören zu einer ersten Leistungsübertragungseinrichtung 96, die Primärspulenanordnung 33 und die Sekundärspulenanordnung 46 zu einer zweiten Leistungsübertragungseinrichtung 97. Der prinzipielle Aufbau der Primär- und Sekundärelektroniken und deren Wirkungsweisen sollen anhand von Fig. 4 näher erläutert werden.

Die Primär-Leistungselektronik PLE umfasst einen Prozessor 58. Er wird über einen Eingang 59 gespeist mit einer 12V oder 24V Gleichspannung, die vom Netzteil einer Gefahrenmeldeanlage bereitgestellt werden kann.

Der Prozessor 58 weist darüber hinaus einen Eingang 60 auf, über welchen die von einem Schaltregler 61, der von derselben Spannungsquelle gespeist wird, abgegebene Spannung erfasst werden kann.

Der Prozessor 58 umfasst einen Ausgang 62, über welchen er an einen Treiber 63 einer Mosfet-Leistungsstufe 64 angeschlossen ist.

Eingangsseitig ist die Mosfet-Leistungsstufe mit dem Ausgang des Schaltreglers verbunden. An dem Ausgang der Mosfet-Leistungsstufe ist die Primärspule 32 angeschlossen.

Der Schaltregler 61 weist einen Regeleingang 65 auf, über welchen die von dem Schaltregler abgegebene Spannung veränderbar ist. Der Regeleingang 65 ist mit dem Fototransistor 42 verbunden.

Die Sekundär-Leistungselektronik SLE umfasst einen Gleichrichter 66, an dessen Eingang die Sekundärspule 45 angeschlossen ist. An den Ausgang 67 des Gleichrichters 66 ist unter Zwischenschaltung eines Überspannungsschutzes 68 ein flügelseitiger Verbraucher 69 angeschlossen.

Die Sekundär-Leistungselektronik SLE umfasst darüber hinaus eine Einrichtung 70 zum Soll/Istwert-Spannungsvergleich, welche die Spannung am Ausgang 67 des Gleichrichters (Istwert) mit einem vorgegebenen Sollwert (12V oder 24V) vergleicht. Die Einrichtung 70 umfasst einen Signalausgang 71, an welchen die LED 54 angeschlossen ist. Die Einrichtung 70 erzeugt am Ausgang 71 ein Spannungssignal, das analog an der LED anliegt und die Intensität der abgegebenen elektromagnetischen Strahlung bestimmt, und von der Soll/Istwert-Differenz abhängt. Das Signal wird von dem Fototransistor 42 erfasst und ein signalabhängiger Spannungswert an den Regeleingang 65 des Schaltreglers 61 übertragen.

Mit Hilfe der Primär- und der Sekundär-Leistungselektroniken PLE, SLE wird somit eine Regelschaltung geschaffen, die dafür sorgt, dass - abgesehen von Verlusten in den Primär- und Sekundärelektroniken sowie bei der galvanisch getrennten Übertragung von der Primärspule 32 auf die Sekundärspule 35 - nur soviel Leistung der Primärspule 32 von der Mosfet-Leistungsstufe 64 zugeführt wird, wie an den Verbraucher 69 abgegeben wird.

Die in der Vorrichtung 100 oben angeordnete Baugruppe B, die die dementsprechende Primärspulenanordnung 33 und die Sekundärspulenanordnung 46 sowie den Fototransistor 41 und die LED 55 umfasst, ist Teil einer Einrichtung zur Übertragung von flügelseitigen Sensoren, Meldern oder Meldegruppen einer Gefahrenmeldeanlage bereitgestellten Signalen. Hierzu sind eine Primärsignalelektronik PSE und eine Sekundärsignalelektronik SSE vorgesehen.

Die Primärsignalelektronik umfasst einen Prozessor 72, welcher einen Versorgungsspannungseingang zum Anlegen einer 12V oder 24V Versorgungsspannung aufweist. Die Versorgungsspannung wird durch ein externes Netzgerät oder durch die Gefahrenmeldeanlage bereitgestellt.

Der Prozessor umfasst des Weiteren einen Anschluss 74, an welchen die Meldegruppenausgänge einer Gefahrenmeldeanlage angeschlossen sind. Der Prozessor 72 wandelt die von den Meldegeräteausgängen erhaltenen Signale in serielle Daten um und verschlüsselt diese, um ein unbefugtes Erfassen dieser Signale bei der späteren galvanisch getrennten Übertragung von der Primärspule 33 auf die Sekundärspule 46 wirksam zu verhindern.

Der Prozessor 72 weist einen Ausgang 75 auf, über welchen er an einen Treiber 76 einer Mosfet-Leistungsstufe 77 angeschlossen ist. Über den Ausgang 75 und den Treiber 76 werden der Mosfet-Leistungsstufe 77 die seriell umgewandelten Daten frequenzmoduliert zugeführt.

An die Mosfet-Leistungsstufe ist darüber hinaus eine interne Spannungsversorgung 78 angeschlossen. Ausgangsseitig ist die Mosfet-Leistungsstufe 77 mit der Primärspule 33 verbunden. Im Betrieb wird die Primärspule 33 daher mit einer Wechselspannung beaufschlagt, die entsprechend der von den Meldegruppenausgängen der Gefahrenmeldeanlage erhaltenen Signale frequenzmoduliert ist.

Der Prozessor 72 umfasst weiterhin Eingänge zur Spannungs/Stromkontrolle, die mit den Polen eines in die Spannungsversorgungsleitung eingeschalteten Widerstands 79 verbunden sind. Die Eingänge sind mit 80 bezeichnet. Schließlich ist an dem Prozessor 72 ein Signaleingang 81 vorgesehen, an welchen der Fototransistor 41 angeschlossen ist.

Die Sekundärelektronik weist ebenfalls einen Prozessor 82 auf. Er umfasst einen Signaleingang 83, an welchen die Sekundärspule 46 angeschlossen ist. Über den Signaleingang 83 erfasst der Prozessor 82 die von der Primärspule 33 auf die Sekundärspule 46 übertragenen Signale durch eine entsprechende Signal-Demodulation der in der Sekundärspule 46 erzeugten, ebenfalls frequenzmodulierten Spannung.

Um flügelseitige Sensoren, Melder oder Meldegruppen der Gefahrenmeldeanlage betreiben zu können, ist die Sekundärspule 46 an einen Gleichrichter 84 angeschlossen. Der Gleichrichter 84 umfasst hierzu einen Ausgang 85, welcher über einen Mosfet 86 an einen Verteiler 87 zur Beaufschlagung der Sensoren, Melder oder Meldegruppen mit der Versorgungsspannung angeschlossen ist.

Der Verteiler 87 weist einen Ausgang 88 auf, der mit einem Eingang 89 des Prozessors verbunden ist, über welchen der Prozessor die den Sensoren, Meldern oder Meldegruppen über den Verteiler 87 bereitgestellte Versorgungsspannung erfasst.

In Abhängigkeit der erfassten Versorgungsspannung steuert der Prozessor 82 einen Ausgang 90, an welchen das Gate des Mosfet 86 angeschlossen ist.

Der Gleichrichter 84 weist einen weiteren Ausgang 91 auf. Dieser ist über einen weiteren Mosfet 92 an eine Spannungsversorgung 93 für externe Melder angeschlossen. Der Mosfet 92 wird wiederum durch den Prozessor über einen Ausgang 94, der mit dem Gate verbunden ist, angesteuert.

Schließlich umfasst der Prozessor 82 einen Signalausgang 95, über welchen von Sensoren, Meldern oder Meldegruppen erkennende Signale geeignet moduliert der LED 55 zugeführt werden. Die entsprechend modulierten Signale werden von dem Fototransistor 41 empfangen und über den Anschluss 81 dem Prozessor 72 der Primärsignalelektronik zur Verfügung gestellt, welcher die Signale geeignet demoduliert und der Gefahrenmeldeanlage über den Anschluss 74 zur Verfügung gestellt.

### Bezugszeichenliste:

- 100: Vorrichtung
- 1, 2: Wandteile
- 3, 4: Befestigungsteile
- 5: Bohrung
- 6: Befestigungsschraube
- 7: Bohrungen
- 8: Kabel
- 9, 10: Aufnahmeteile
- 11, 12: Leistungs- und Signalübertragungseinrichtungen
- 13: Flügelteil
- 14: Befestigungsteil
- 15: Aufnahmeteil
- 16: Bohrung
- 17: Befestigungsschraube
- 18: Bohrungen
- 19: Kabel
- 20, 21: Lagerhülsen
- 22: Spindelantrieb
- 23: Stellspindel
- 24: Kronenrad
- 25, 26: Gewindebereich
- 27, 28: Innengewinde
- 29, 30: Lagerhülse
- 31: Klemmeinrichtung
- 32, 33: Primärspulenanordnung
- 34, 35: Spulengehäuse
- 36, 37: Kern
- 38, 39: Spulenwicklungen
- 40: zentrale Bohrung
- 41, 42: Fototransistor
- 43, 44: Signalübertragungseinrichtung
- 45, 46: Sekundärspulenanordnung
- 47, 48: Spulengehäuse
- 49, 50: Kern
- 51, 52: Sekundärspulenwicklungen
- 53: zentrale Bohrung
- 54, 55: Leuchtdiode
- 56, 57: Lichtleitereinsätze
- 58: Prozessor
- 59: Eingang
- 60: Eingang
- 61: Schaltregler
- 62: Ausgang
- 63: Treiber
- 64: Mosfet-Leistungsstufe
- 65: Regeleingang
- 66: Gleichrichter
- 67: Ausgang
- 68: Überspannungsschutz
- 69: Verbraucher
- 70: Soll/Istwert-Spannungsvergleich
- 71: Signalausgang
- 72: Prozessor
- 73: Eingang
- 74: Anschluss
- 75: Ausgang
- 76: Treiber
- 77: Mosfet-Leistungsstufe
- 78: Spannungsversorgung
- 79: Widerstand
- 80: Eingänge
- 81: Signaleingang
- 82: Prozessor
- 83: Signaleingang
- 84: Gleichrichter
- 85: Ausgang
- 86: Mosfet
- 87: Verteiler
- 88: Ausgang
- 89: Eingang
- 90: Ausgang
- 91: Ausgang
- 92: Mosfet
- 93: Spannungsversorgung
- 94: Ausgang
- 95: Signal
- 96: erste Leistungsübertragungseinrichtung
- 97: zweite Leistungsübertragungseinrichtung

- A: Achse
- B: Baugruppe
- S: Scharnierachse
- PLE: Primärleistungselektronik
- SLE: Sekundärleistungselektronik
- PSE: Primärsignalelektronik
- SSE: Sekundärsignalelektronik
- PS: Primärseite
- SS: Sekundärseite

## Patentansprüche

1. Vorrichtung (100) zur Übertragung von elektrischer Leistung und von Signalen zwischen einer feststehenden Wand und einem an der Wand befestigten Flügel,
mit zwei in Richtung einer Scharnierachse (S) beabstandeten Wandteilen (1, 2),
mit einem zwischen den beiden Wandteilen (1, 2) angeordneten Flügelteil (13), wobei die Wandteile (1, 2) und das Flügelteil (13) jeweils ein Befestigungsteil (3, 4; 14) und ein daran angeformtes Aufnahmeteil (9, 10; 15) aufweisen, und um die Scharnierachse (S) verschwenkbar zueinander angeordnet sind,
mit einer Leistungsübertragungseinrichtung (96, 97) zur galvanisch getrennten Übertragung der elektrischen Leistung, die eine Primärspulenanordnung (32, 33) und eine Sekundärspulenanordnung (45, 46) aufweist,
und mit einer Signalübertragungseinrichtung (43, 44), wobei die Spulenanordnungen (32, 33; 44, 45) und die Signalübertragungseinrichtungen (43, 44) jeweils eine zentrale Achse (A) aufweisen und derart in den Aufnahmeteilen (9, 10; 15) angeordnet sind, dass die zentralen Achsen etwa mit der Scharnierachse (S) zusammenfallen,
**dadurch gekennzeichnet,**
**dass**
a) eine erste Leistungsübertragungseinrichtung (96) zur bedarfsgerechten Bereitstellung von elektrischer Leistung für flügelseitige Verbraucher,
b) eine erste Signalübertragungseinrichtung (43) zur Regelung der mittels der ersten Leistungsübertragungseinrichtung (96) für flügelseitige Verbraucher bereitgestellten elektrischen Leistung,
c) eine zweite Leistungsübertragungseinrichtung (97) zur Bereitstellung von zum Betrieb von Sensoren, Meldern und/oder Meldegruppen benötigten Leistung, sowie
d) eine zweite Signalübertragungseinrichtung (44) zur Übertragung von Betriebs- und/oder Meldezuständen von sekundärseitigen Sensoren, Meldern oder Meldegruppen, an eine primärseitige Gefahrenmeldeanlage vorgesehen sind, und
**dass** die Signalübertragungseinrichtungen als optische oder opto-elektronische Signalübertragungseinrichtungen ausgebildet sind.

2. Vorrichtung nach Anspruch 1, **dadurch gekennzeichnet, dass** die Signalübertragungseinrichtung (43, 44) eine Leuchtdiode (54, 55) und eine Fotodiode oder einen Fototransistor (41, 42) umfasst.

3. Verfahren zur Übertragung von elektrischer Leistung und von Signalen zwischen einer feststehenden Wand und einem an dieser Wand befestigten Flügel,
wobei die elektrische Leistung galvanisch getrennt und die Signale optisch oder opto-elektronisch mit Hilfe einer Vorrichtung mit den Merkmalen des Anspruchs 1 übertragen werden.

4. Verfahren nach Anspruch 3, **dadurch gekennzeichnet, dass** die elektrische Leistung von einer Primär- zu einer Sekundärseite (PS; SS) und die Signale von der Sekundär- zur Primärseite (SS; PS) übertragen werden.

5. Verfahren nach Anspruch 4, **dadurch gekennzeichnet, dass** die Primärseite die Wandseite und die Sekundärseite die Flügelseite ist.

6. Verfahren nach Anspruch 4 oder 5, **dadurch gekennzeichnet, dass** primärseitig eine Gleichspannung bereitgestellt wird, und dass diese Gleichspannung in eine Wechselspannung einer Frequenz vorzugsweise zwischen 10 und 300 kHz umgewandelt wird, um zur galvanisch getrennten induktiven Übertragung verwendet zu werden.

7. Verfahren nach einem der Ansprüche 4 bis 6, **dadurch gekennzeichnet, dass** die Signale zur Regelung der elektrischen Leistung auf der Primärseite verwendet werden.

8. Verfahren nach einem der Ansprüche 4 bis 7, **dadurch gekennzeichnet, dass** die Signale zur Übertragung von Betriebs- und/oder Meldezuständen von sekundärseitigen Sensoren, Meldern oder Meldegruppen an eine primärseitige Gefahrenmeldeanlage dienen.

## Claims

1. Device (100) for transmitting electrical power and signals between a stationary wall and a sash fastened to the wall,
comprising two wall parts (1, 2) that are mutually spaced in the direction of a hinge axis (S), comprising a sash part (13) arranged between the two wall parts (1, 2),
the wall parts (1, 2) and the sash part (13) each comprising a fastening part (3, 4; 14) and a receiving part (9, 10; 15) formed thereon and each being arranged so as to be pivotable about the hinge axis (S) relative to one another,
comprising a power transmitting means (96, 97) for galvanically separated transmission of the electrical power, which means comprises a primary coil assembly (32, 33) and a secondary coil assembly (45, 46),
and comprising a signal transmitting means (43, 44), the coil assemblies (32, 33; 45, 46) and the signal transmitting means (43, 44) each comprising a central axis (A) and being arranged in the receiving parts (9, 10; 15) such that the central axes approximately coincide with the hinge axis (S),
**characterized in that**
a) a first power transmitting means (96) for providing electrical power for loads on the sash side as needed,
b) a first signal transmitting means (43) for regulating the electrical power provided by means of the first power transmitting means (96) for loads on the sash side,
c) a second power transmitting means (97) for providing power required to operate sensors, detectors and/or detector groups, and
d) a second signal transmitting means (44) for transmitting operating and/or alerting states of sensors, detectors or detector groups on the secondary side to an alarm system on the primary side
are provided, and
**in that** the signal transmitting means are designed as optical or opto-electronic signal transmitting means.

2. Device according to claim 1, **characterized in that** the signal transmitting device (43, 44) comprises a light emitting diode (54, 55) and a photodiode or a phototransistor (41, 42).

3. Method for transmitting electrical power and signals between a stationary wall and a sash fastened to the wall, wherein the electrical power is galvanically separated and the signals are optically or opto-electronically transmitted by means of a device comprising the features of claim 1.

4. Method according to claim 3, **characterized in that** the electrical power is transmitted from a primary side to a secondary side (PS; SS) and the signals are transmitted from the secondary side to the primary side (SS; PS).

5. Method according to claim 4, **characterized in that** the primary side is the wall side and the secondary side is the sash side.

6. Method according to either claim 4 or claim 5, **characterized in that** a DC voltage is provided on the primary side, and **in that** this DC voltage is converted into an AC voltage having a frequency preferably of between 10 and 300 kHz, in order to be used for galvanically separated inductive transmission.

7. Method according to any of claims 4 to 6, **characterized in that** the signals are used for regulating the electrical power on the primary side.

8. Method according to any of claims 4 to 7, **characterized in that** the signals are used for transmitting operating and/or alerting statuses of sensors, detectors or detector groups on the secondary side to an alarm system on the primary side.

## Revendications

1. Dispositif (100) de transmission d'énergie électrique et de signaux entre une paroi fixe et un battant fixé au mur, comprenant
deux éléments de paroi (1, 2) espacés dans la direction d'un axe d'articulation (S),
un élément de battant (13) disposé entre les deux éléments de paroi (1, 2),
les éléments de paroi (1, 2) et l'élément de battant (13) comprenant chacun un élément de fixation (3, 4 ; 14) et un élément de réception (9, 10 ; 15), formé au niveau de ce dernier, et étant disposés les uns par rapport aux autres de manière pivotante sur l'axe d'articulation (S), un moyen de transmission d'énergie (96, 97) destiné à la transmission galvaniquement séparée de l'énergie électrique, qui comporte un ensemble formant bobine primaire (32, 33) et un ensemble formant bobine secondaire (45, 46), et
un moyen de transmission de signal (43, 44), les ensembles formant bobine (32, 33 ; 44, 45) et les moyens de transmission de signal (43, 44) comportant chacun un axe central (A) et étant disposés dans les élément de réception (9, 10 ; 15) de telle sorte que les axes centraux coïncident à peu près avec l'axe d'articulation (S),
**caractérisé en ce qu**'il est prévu
a) un premier moyen de transmission d'énergie (96) destiné à fournir de l'énergie électrique à des consommateurs côté battant selon la demande,
b) un premier moyen de transmission de signal (43) destiné à réguler l'énergie électrique fournie à des consommateurs côté battant par le premier moyen de transmission d'énergie (96),
c) un deuxième moyen de transmission d'énergie (97) destiné à fournir de l'énergie nécessaire au fonctionnement de capteurs, de détecteurs et/ou des groupes de signalisation, ainsi que
d) un deuxième moyen de transmission de signaux (44) destiné à transmettre des états de fonctionnement et/ou de signalisation de capteurs, de détecteurs ou de groupes de signalisation côté secondaire, à un système de signalisation de danger côté primaire, et en ce que
les moyens de transmission de signaux sont conçus comme des dispositifs de transmission de signaux optiques ou optoélectroniques.

2. Dispositif selon la revendication 1, **caractérisé en ce que** le moyen de transmission de signaux (43, 44) comprend une diode électroluminescente (54, 55) et une photodiode ou un phototransistor (41, 42).

3. Procédé de transmission d'énergie électrique et de signaux entre une paroi fixe et un battant fixé à cette paroi,
l'énergie électrique étant galvaniquement séparée et les signaux étant transmis de manière optique ou optoélectronique à l'aide d'un dispositif présentant les caractéristiques de la revendication 1.

4. Procédé selon la revendication 3, **caractérisé en ce que** l'énergie électrique est transmise d'un côté primaire à un côté secondaire (PS ; SS) et les signaux sont transmis du côté secondaire au côté primaire (SS ; PS).

5. Procédé selon la revendication 4, **caractérisé en ce que** le côté primaire est le côté paroi et le côté secondaire est le côté battant.

6. Procédé selon la revendication 4 ou 5, **caractérisé en ce qu**'une tension continue est fournie du côté primaire, et en ce que cette tension continue est convertie en une tension alternative d'une fréquence de préférence comprise entre 10 et 300 kHz, laquelle sera utilisée pour la transmission inductive galvaniquement séparée.

7. Procédé selon l'une des revendications 4 à 6, **caractérisé en ce que** les signaux sont utilisés pour réguler l'énergie électrique du côté primaire.

8. Procédé selon l'une des revendications 4 à 7, **caractérisé en ce que** les signaux sont utilisés pour transmettre des états de fonctionnement et/ou de signalisation de capteurs, de détecteurs ou de groupes de signalisation côté secondaire à un système de signalisation de danger du côté primaire.
